# EUROPEAN PATENT APPLICATION

(11) **EP 3 258 126 A1**
(43) Date of publication of application: **20.12.2017**
(21) Application number: 17160988.6
(22) Date of filing: 15.03.2017
(51) Int. Cl.: F16C 27/04, F16C 33/66, F16C 19/54, F01D 25/16, F16F 15/023, F16C 35/077, F16C 19/16

(54) **ROLLING BEARING ASSEMBLY OF AN EXHAUST GAS TURBOCHARGER WITH SQUEEZE OIL FILM DAMPER**

(30) Priority: 06.04.2016 JP 2016076652
(71) Applicant: OTICS Corporation, Nishio-city Aichi 444-0392 (JP)
(72) Inventor: ISOGAI, Tomoyuki, Nishio-city, Aichi 444-0392 (JP)
(74) Representative: Kramer Barske Schmidtchen Patentanwälte PartG mbB

(57) **Abstract**

A bearing structure (1) of a turbocharger includes a rotor shaft (10), two angular ball bearings (20), a retainer (60), a housing (30), and an oil film damper (50). Each of the angular ball bearings (20) includes an inner ring (21) and an outer ring (22) that are supported in relatively rotatable manner. The rotor shaft (10) is inserted into the inner ring (21). The retainer (60) holds the outer ring (22). The housing (30) houses therein the rotor shaft (10), the angular ball bearings (20), and the retainer (60) to constitute a bearing housing. The oil film damper (50) is formed of oil in a film state and is interposed between the inner ring (21) and an outer peripheral surface (10c) of the rotor shaft (10). The inner ring (21) is configured to rotate with rotation of the rotor shaft (10) via the oil film damper (50).

## Description

### BACKGROUND OF THE INVENTION

### Field of the Invention

The present invention relates to a bearing structure of a turbocharger.

### Description of the Related Art

An internal combustion engine has been conventionally provided with a turbocharger which utilizes a flow of exhaust gas discharged from the internal combustion engine to compress intake air. The turbocharger includes a rotor shaft, a turbine impeller provided at one end of the rotor shaft, and a compressor impeller provided at the other end of the rotor shaft, and the rotor shaft is borne by a bearing structure. The bearing structure is housed in a bearing housing. JP-A-2012-92934 discloses a turbocharger that includes, as such a bearing structure, a bearing structure that has a ball bearing mounted on a rotor shaft and an oil film damper formed by filling the space between the ball bearing and a bearing housing with lubricant oil.

In the configuration disclosed in JP-A-2012-92934, the ball bearing includes an annular inner ring, an annular outer ring, and a ball interposed between the inner ring and the outer ring so that the inner ring and the outer ring can sliply rotate. The rotor shaft is fitted into the inner ring. A rotation body assembly is thus constituted so that the rotor shaft, impellers provided at ends of the rotor shaft, and the inner ring of the angular ball bearing can integrally rotate. An oil film damper is formed between the outer ring of the ball bearing and the bearing housing by filling the space therebetween with oil, and the oil film damper is configured to exhibit a damping effect of suppressing vibration of the rotation body assembly.

According to the configuration described above, an oil film damper is formed between an outer ring of a ball bearing and a bearing housing. Therefore, all the components inside the oil film damper include not only a rotor shaft and impellers but also the ball bearing, and thus the mass of all the components inside the oil film damper is relatively large. The outer diameter of the outer ring of the ball bearing is much larger than the inner diameter of an inner ring, and thus the contact area of the oil film damper and the outer ring of the ball bearing is relatively large. As a result, viscous force between the oil film damper and the outer ring tends to be large and, especially under low temperature environment, viscosity increases significantly.

Meanwhile, not a small amount of residual unbalance is always present in a rotation body assembly and thus a center of mass of the rotation body assembly in a radial direction is positioned to be shifted from a shaft center (centroid) of the rotor shaft. For this reason, during axial rotation of the rotation body assembly, the rotation body assembly tends to rotate eccentrically about an axis passing through the center of mass shifted from the shaft center of the rotor shaft. When the (inertial) mass of the components inside the oil film damper is large and the viscous force is high, however, the eccentric rotation of the rotation body assembly is hindered and thus the rotation body assembly has to rotate about a position close to the centroid. Further, each of the impellers at both ends of the rotor shaft is in a state of a cantilever. In such a case, the impellers whirl with rotation of the rotor shaft. As a result, unusual noise may be generated during initial rotation or the impellers may contact the housing and be damaged. These problems are more serious under low temperature environment. To prevent damage of the impellers, a clearance between each impeller and the housing (a tip clearance) needs to be increased. The increased tip clearance, however, causes a decrease in operation efficiency of a turbocharger.

As one proposal to prevent generation of such unusual noise and such a decrease in operation efficiency, it is conceivable to adjust the mass balance of the rotation body assembly so that a shift of the center of mass of the rotation body assembly from the shaft center of the rotor shaft is minimized, in order not to hinder the eccentric rotation of the rotation body assembly. In this configuration, however, the mass balance needs to be adjusted with high accuracy, which results in cost increase.

If screw hole machining is performed on the rotor shaft for co-rotation of the components inside the oil film damper and the components outside the oil film damper, adjustment of the mass balance of the rotation body assembly needs more time and effort, which results in cost increase. Further, if screw hole machining is performed on the rotor shaft, a screw hole concentratedly suffers stress, which may cause a decrease in fatigue strength of the rotor shaft. In such a case, as one proposal to compensate for such a decrease in fatigue strength, it is conceivable to prepare the rotor shaft with a large diameter in the first place to secure sufficient fatigue strength. However, the large diameter of the rotor shaft needs to increase the size of a ball bearing. Thus, the contact area of the oil film damper and the ball bearing increases and the viscous force between the oil film damper and the ball bearing also increases, which decreases the operation efficiency of the turbocharger. Moreover, there is a problem that a high-speed rotation of the rotor shaft easily unfastens a screw directly fastened to the rotor shaft.

The present invention has been achieved under such a background to provide a bearing structure of a turbocharger that can prevent generation of unusual noise, improve operation efficiency, and reduce manufacturing costs.

### SUMMARY OF THE INVENTION

One aspect of the present invention provides a bearing structure of a turbocharger that includes a rotor shaft having a turbine impeller mounted on a first end thereof and a compressor impeller mounted on a second end thereof, two angular ball bearings each of which includes an inner ring and an outer ring that are supported in relatively rotatable manner, the inner ring having the rotor shaft inserted therein, a retainer that holds the outer ring, a housing that houses the rotor shaft, the angular ball bearings, and the retainer, and an oil film damper that is formed of oil in a film state and is interposed between the inner ring and an outer peripheral surface of the rotor shaft. The inner ring is configured to rotate with rotation of the rotor shaft via the oil film damper.

In the bearing structure of a turbocharger described above, the oil film damper is formed between the inner ring of the angular ball bearing and the rotor shaft. In this way, the angular ball bearing and the retainer are not arranged inside the oil film damper. Therefore, the (inertial) mass of the components inside the oil film damper is relatively small. Further, the inner diameter of the inner ring of the angular ball bearing is much smaller than the outer diameter of the outer ring, and thus the contact area of the oil film damper and the outer peripheral surface of the rotor shaft is relatively small. For the reasons mentioned above, viscous force between the inner ring of the angular ball bearing and the outer peripheral surface of the rotor shaft can be relatively reduced.

Reduction of the viscous force reduces inhibition force caused by viscosity to hinder the rotation of a rotation body assembly about a center of mass. Further, the smaller (inertial) mass of the components inside the oil film damper enables the rotation body assembly to easily rotate eccentrically. As a result, during rotation of the rotor shaft, the impellers at both ends of the rotor shaft is prevented from largely whirling, which enables to prevent generation of unusual noise. Further, a tip clearance between each of the impellers and the housing is optimized to improve operation efficiency. As described above, the rotation body assembly easily rotates eccentrically and thus not so high accuracy is required to adjust the mass balance of the rotation body assembly. As a result, the mass balance is easily adjusted and thus manufacturing costs can be reduced.

As described above, because the viscous force between the oil film damper and the outer peripheral surface of the rotor shaft can be relatively reduced, an improvement in rotation response of the rotation body assembly can be expected so as to contribute to an improvement in transient performance of an internal combustion engine.

Especially when the viscosity of oil tends to be high, e.g. under low temperature environment, the reduction of the viscous force enables to sufficiently bring about an oil damping effect on the rotation body assembly.

In the bearing structure described above, the inner ring is configured to rotate with the rotation of the rotor shaft via the oil film damper. Specifically, friction in the oil film damper (that is, friction between the inner ring of the angular ball bearing and the rotor shaft) is larger than friction in the angular ball bearing (that is, friction between the inner ring and the outer ring). For this reason, when the rotor shaft rotates, relative rotation occurs between the inner ring and the outer ring in the angular ball bearing but relative rotation between the inner ring and the rotor shaft is suppressed in the oil film damper, so that the inner ring can rotate with the rotation of the rotor shaft only via the oil film damper. As a result, any additional mechanism for engaging the inner ring with the rotor shaft need not be provided to rotate the inner ring with the rotor shaft. For example, screw hole machining on the rotor shaft needs not be performed to engage the rotor shaft with the inner ring. Machining on an end of the inner ring needs not be performed to engage the end of the inner ring with an oil slinger. Further, machining on the end of the inner ring and a collar needs not be performed to engage the end of the inner ring with the collar. Therefore, such machining costs can be eliminated and the mass balance of the rotation body assembly is easily adjusted and thus manufacturing costs can be reduced.

Because the rotor shaft need not be subjected to screw hole machining, fatigue strength of the rotor shaft is improved as compared to a case where screw hole machining is performed on the rotor shaft. The improvement of fatigue strength eliminates the necessity to increase the diameter of the rotor shaft. As a result, the angular ball bearing can be downsized and the contact area of the oil film damper and the angular ball bearing can be reduced. Consequently, the viscous force between the oil film damper and the angular ball bearing can be reduced to improve the operation efficiency of a turbocharger. Further, loosening of a screw that might be caused by high speed rotation of the rotor shaft needs not be considered.

Further, the configuration in which the oil film damper is formed inside the inner rings of the two angular ball bearings exhibits the operational effects described above, and enables to support not only a radial load but also axial loads in both directions. In addition, the configuration in which these two angular ball bearings are employed enables to simplify the bearing structure and to reduce manufacturing costs.

According to the present invention, it is possible to provide a bearing structure of a turbocharger that can prevent generation of unusual noise, improve operation efficiency, and reduce manufacturing costs.

### BRIEF DESCRIPTION OF THE DRAWINGS

FIG. 1 is a cross-sectional schematic view of a bearing structure of a turbocharger according to Embodiment 1;
FIG. 2 is an enlarged view around an oil film damper shown in FIG. 1;
FIG. 3 is a perspective view of a retainer and an angular ball bearing according to Embodiment 1; and
FIG. 4 is a perspective view of a collar according to Embodiment 1.

### DETAILED DESCRIPTION OF THE INVENTION

The retainer is preferably formed in a cylindrical shape having a through hole into which the rotor shaft is inserted. The two angular ball bearings are preferably positioned respectively at both ends of the retainer in an axial direction. In such a case, the two angular ball bearings bear the rotor shaft at the both ends of the retainer, and thus rotational stability of the rotor shaft is improved.

The retainer preferably includes an oil supply path that ejects oil toward the oil film damper to supply the oil film damper with the oil. Such configuration enables to exhibit a wedge effect of positively charging the oil film damper inside an inner ring with the oil ejected from the oil supply path, and thus lubricity of the oil in the oil film damper is improved.

The inner ring preferably has an inner chamfered part obtained by chamfering an inner corner portion of the inner ring at an end of the inner ring on a side close to an ejection port of the oil supply path in an axial direction. Such configuration enables to easily charge the oil film damper inside the inner ring with the oil ejected from the oil supply path, and thus the lubricity of the oil in the oil film damper is further improved by the wedge effect.

### (Embodiment 1)

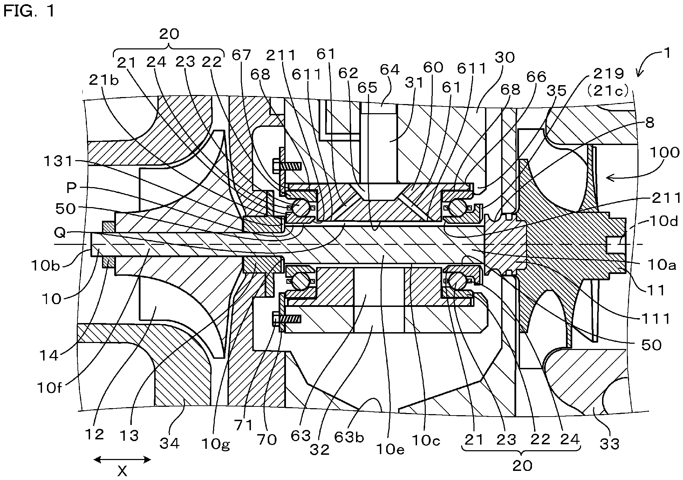

A bearing structure of a turbocharger 1 according to an embodiment is described with reference to FIGS. 1 to 4.

As shown in FIG. 1, the bearing structure 1 according to the present embodiment includes a rotor shaft 10, an angular ball bearing 20, a retainer 60, and a housing 30.

A turbine impeller 11 is mounted on a first end 10a of the rotor shaft 10 and a compressor impeller 12 is mounted on a second end 10b thereof.

Two angular ball bearings 20 are provided and each of the angular ball bearings 20 includes an inner ring 21 and an outer ring 22 that are supported in relatively rotatable manner. The rotor shaft 10 is inserted into the inner ring 21.

The retainer 60 holds the outer ring 22.

The housing 30 houses therein the rotor shaft 10, the angular ball bearings 20, and the retainer 60 to constitute a bearing housing.

An oil film damper 50 is formed of oil in a film state and is interposed between the inner ring 21 and an outer peripheral surface 10c of the rotor shaft 10.

The inner ring 21 is configured to rotate with rotation of the rotor shaft 10 via the oil film damper 50.

The bearing structure 1 according to the present embodiment will be described in detail below.

As shown in FIG. 1, the first end 10a of the rotor shaft 10 is provided integrally with the turbine impeller 11. The turbine impeller 11 is housed in a turbine housing 33. On the other hand, the second end 10b of the rotor shaft 10 is inserted into a collar 13 and the compressor impeller 12, and a shaft end nut 14 prevents the collar 13 and the compressor impeller 12 from coming off and rotating. The compressor impeller 12 is housed in a compressor housing 34. The housing 30 provided as a bearing housing for the rotor shaft 10 is provided between the turbine housing 33 and the compressor housing 34.

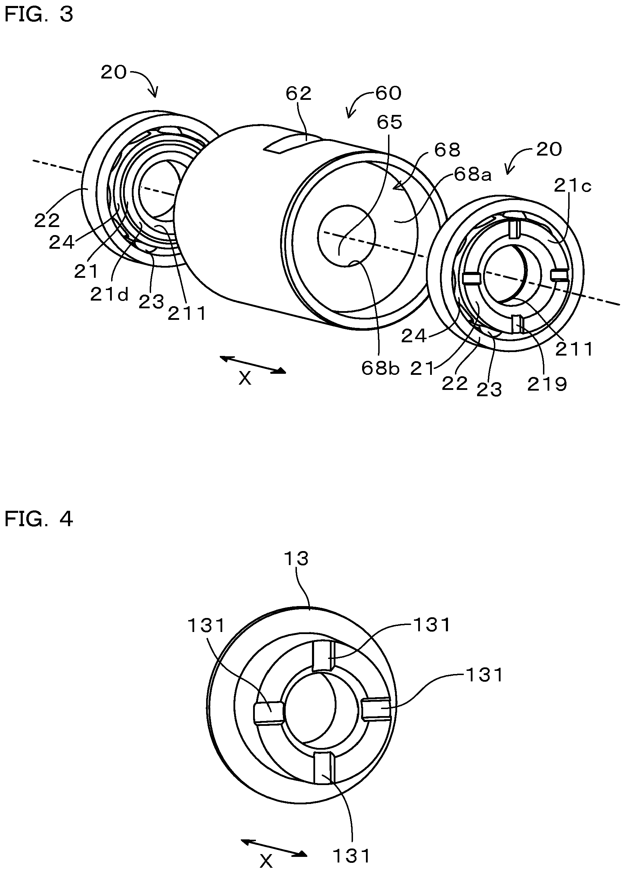

As shown in FIG. 1, the retainer 60 is provided in the housing 30. As shown in FIGs. 1 and 3, the retainer 60 is formed in a substantially cylindrical shape and the rotor shaft 10 is inserted into the retainer 60. A recessed part 68 is formed at both ends of the retainer 60 in an axial direction X. The recessed part 68 is formed along the outline of the angular ball bearing 20, and as shown in FIGS. 1 and 3, the angular ball bearing 20 is fitted into the recessed part 68. The two angular ball bearings 20 are thus held by the retainer 60.

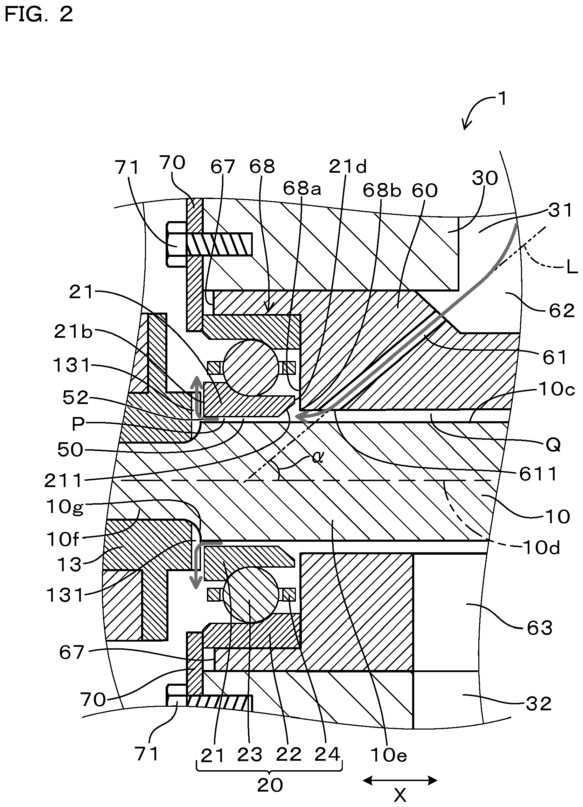

As shown in FIGS. 2 and 3, the angular ball bearing 20 is arranged in a single row and includes the inner ring 21, the outer ring 22, a rotator 23, and a holder 24. The inner ring 21 and the outer ring 22 are formed in an annular shape. The rotator 23 has a ball shape and is interposed between the inner ring 21 and the outer ring 22 through the holder 24. The inner ring 21 and the outer ring 22 are thus configured to be relatively rotatable through the rotator 23. The outer ring 22 is fixed to the retainer 60 by fitting the angular ball bearing 20 into the recessed part 68 of the retainer 60, and then fixed to the housing 30 through the retainer 60.

As shown in FIG. 1, the two angular ball bearings 20 are fitted into the retainer 60 to be opposite to each other in the axial direction X. That is, the angular ball bearing 20 on a side of the turbine impeller 11 is configured to be able to support an axial load applied from the side of the turbine impeller 11 toward the center of the retainer 60. On the other hand, as shown in FIGs. 1 and 2, the angular ball bearing 20 on a side of the compressor impeller 12 is configured to be able to support an axial load applied from the side of the compressor impeller 12 toward the center of the retainer 60. Such configured two angular ball bearings 20 can support not only a radial load but also the axial loads in both directions.

As shown in FIGs. 1 and 2, the rotor shaft 10 is inserted inside the inner ring 21 and the retainer 60. The rotor shaft 10 has a large diameter part 10e on a side of the first end 10a and a small diameter part 10f on a side of the second end 10b. The small diameter part 10f has a diameter smaller than that of the large diameter part 10e, and a stepped part 10g is formed between the large diameter part 10e and the small diameter part 10f. The compressor impeller 12 is provided on the small diameter part 10f, and the collar 13 as an annular member is provided between the compressor impeller 12 and the stepped part 10g. The collar 13 has an annular shape and is fixed to the small diameter part 10f together with the compressor impeller 12 by the shaft end nut 14.

As shown in FIG. 1, the first end 10a of the rotor shaft 10 is provided with an enlarged diameter part 111. The enlarged diameter part 111 is fixed to the first end 10a of the rotor shaft 10 by welding. The turbine impeller 11 is joined to the enlarged diameter part 111. An oil slinger 8 is formed at the enlarged diameter part 111.

As shown in FIGS. 1 and 2, the retainer 60 and the two angular ball bearings 20 are positioned so as to oppose the large diameter part 10e of the rotor shaft 10. The inner diameter of the inner ring 21 is larger than the outer diameter of the large diameter part 10e of the rotor shaft 10 by approximately 0.05 to 0.1 mm. The inner diameter of an inner peripheral surface 65 of the retainer 60 between the two angular ball bearings 20 is larger than the outer diameter of the large diameter part 10e of the rotor shaft 10 by approximately 0.2 to 0.3 mm or more. Accordingly, a clearance Q between the inner peripheral surface 65 of the retainer 60 and the outer peripheral surface 10c of the large diameter part 10e of the rotor shaft 10 is twice or more larger than a clearance P between the inner ring 21 and the outer peripheral surface 10c. The clearances P and Q have a certain size in a peripheral direction in a stationary state where the center of the inner ring 21 is aligned with the center of the rotor shaft 10.

In the clearance P between the inner ring 21 and the rotor shaft 10, oil is interposed in a film state to form the oil film damper 50. As shown in FIG. 2, oil is supplied from an oil supply path 61 formed in the retainer 60. The oil enters between the inner ring 21 and the rotor shaft 10 via an inner chamfered part 211 and then reaches the clearance P to form the oil film damper 50.

As shown in FIGs. 1 and 2, the oil supply path 61 establishes communication between an oil storage part 62 formed in a recessed shape at a vertically upper part of the retainer 60 and the inside of the retainer 60 (that is, a through part where the rotor shaft 10 is placed). In the present embodiment, the oil supply path 61 passing through the retainer 60 straightway is formed at an inclined angle to be close to the oil film damper 50 as approaching closer to the rotor shaft 10. At an exit of the oil supply path 61 (an end of the oil supply path 61 on a side of the rotor shaft 10), an oil ejection port 611 that is open to eject oil flowing in the oil supply path 61 to the oil film damper 50 is formed. The oil storage part 62 of the retainer 60 communicates with an upper hole 31 of the housing 30 to supply oil through the upper hole 31. The upper hole 31 is closed by a plug 64. The plug 64 is removable.

As shown in FIGS. 1 and 2, the inner peripheral surface 65 of the retainer 60 directly opposes the outer peripheral surface 10c of the rotor shaft 10. Oil is ejected from the oil ejection port 611 of the oil supply path 61 that is open in the inner peripheral surface 65. The oil is directly ejected toward the outer peripheral surface 10c of the rotor shaft 10 to be supplied to the oil film damper 50 positively by a wedge effect.

According to the present embodiment, as shown in FIG. 1, two oil supply paths 61 are provided so as to supply oil to the respective oil film dampers 50 formed at both ends in the axial direction X. An oil discharge path 63 is formed at a vertically lower part of the retainer 60 to discharge oil around the angular ball bearing 20. A lower hole 32 of the housing 30 and an oil discharge port 63b that is open to outside of the housing 30 are formed under the oil discharge path 63. An auxiliary oil supply path extending vertically to the axial direction X may be formed between the two oil supply paths 61.

As shown in FIG. 1, each of the two oil supply paths 61 is formed extending straightway from the oil storage part 62 toward each of the oil film dampers 50. As shown in FIG. 2, in one of the two oil supply paths 61 which extends toward the oil film damper 50 on the side of the compressor impeller 12, a center line L, an imaginary line parallel to the through direction of the oil supply path 61 is linear. The center line L is inclined with respect to a shaft center 10d of the rotor shaft 10. An angle α of the center line L and the shaft center 10d is preferably equal to or less than 45° and more preferably equal to or less than 30°. In the present embodiment, the angle α is 30°. The oil supply path 61 extending toward the oil film damper 50 on the side of the turbine impeller 11 is formed in the same manner.

As shown in FIG. 2, in the angular ball bearing 20 on the side of the compressor impeller 12, the inner ring 21 has the inner chamfered part 211 at an end thereof on a side close to the ejection port 611 of the oil supply path 61 in the axial direction X. The inner chamfered part 211 is formed on entire inner corner part of the inner ring 21 by chamfering the inner corner part. A small clearance is provided between an end surface 21d of the inner ring 21 in the axial direction X on the side close to the ejection port 611 and a wall surface 68a of the recessed part 68 in which the angular ball bearing 20 is placed, the wall surface 68a opposing the end surface 21d in the axial direction X. As shown in FIG. 2, a corner part 68b of the recessed part 68 on a side of the inner peripheral surface 65 is positioned radially inside the end surface 21d of the inner ring 21. That is, the corner part 68b is positioned radially inside an outer peripheral end of the inner chamfered part 211. Accordingly, although the clearance provided between the end surface 21d of the inner ring 21 and the wall surface 68a opposing the end surface 21d is small, the oil ejected from the ejection port 611 is supplied preferentially to the oil film damper 50 along the inner chamfered part 211. The angular ball bearing 20 on the side of the turbine impeller 11 is formed in the same manner.

As shown in FIG. 2, on the side of the compressor impeller 12, the oil supplied to the oil film damper 50 is discharged from an end 52 of the oil film damper 50 on the side of the compressor impeller 12 and scattered radially outside of the rotor shaft 10 via an oil discharge groove 131 formed in the collar 13. The oil is thus positively discharged from the oil film damper 50. As shown in FIG. 4, the oil discharge groove 131 is formed by cutting a part of the collar 13 opposing the angular ball bearing 20 in a recessed shape. In the present embodiment, the oil discharge groove 131 is formed in 4 places along a diameter direction of the collar 13 at peripherally equal intervals. On the side of the compressor impeller 12, instead of the oil discharge groove 131 of the collar 13, an oil discharge groove that is identical to the oil discharge groove 131 may be formed at an end 21b of the inner ring 21 of the angular ball bearing 20 in an axial direction that opposes the collar 13.

On the other hand, although not shown in the drawings, on the side of the turbine impeller 11, the oil supplied to the oil film damper 50 is discharged from an end of the oil film damper 50 on the side of the turbine impeller 11 and scattered radially outside of the rotor shaft 10 via an oil discharge groove 219 formed in the inner ring 21 (see FIGs. 1 and 3). The oil is thus positively discharged from the oil film damper 50. As shown in FIG. 3, the oil discharge groove 219 is formed by cutting an end 21c of the inner ring 21 in an axial direction on the side of the turbine impeller 11 in a recessed shape. In the present embodiment, the oil discharge groove 219 is formed in 4 places along a diameter direction of the inner ring 21 at peripherally equal intervals. In place of the oil discharge groove 219 of the inner ring 21, an oil discharge groove that is identical to the oil discharge groove 219 may be formed in the enlarged diameter part 111 opposing the inner ring 21.

The rotor shaft 10 is mounted on the housing 30 in the following way. As shown in FIG. 3, the angular ball bearings 20 are fitted into both ends of the retainer 60 to be opposite to each other as described above. The retainer 60 having the angular ball bearings 20 fitted thereon is then inserted into the housing 30. As shown in FIG. 1, the outer ring 22 of the angular ball bearing 20 on the side of the turbine impeller 11 protrudes a little further in the axial direction X than a distal end 66 of the retainer 60, and thus the outer ring 22 abuts against a bottom part 35 of the housing 30. The outer ring 22 of the angular ball bearing 20 on the side of the compressor impeller 12 also protrudes a little further in the axial direction X than a distal end 67 of the retainer 60, and by mounting a plate 70 on the housing 30 by a bolt 71, the outer ring 22 abuts against the plate 70. In this way, the two angular ball bearings 20 and the retainer 60 are held between the plate 70 and the housing 30 to be positioned and fixed.

The rotor shaft 10 having the turbine impeller 11 mounted thereon is inserted into the housing 30 from a side of the turbine housing 33. The collar 13 and the compressor impeller 12 are then fixed to the rotor shaft 10 by tightening the shaft end nut 14.

As shown in FIG. 2, in the angular ball bearing 20 on the side of the compressor impeller 12, the outer ring 22 protrudes a little further in the axial direction X than the distal end 67 of the retainer 60 and thus a small clearance is formed between the inner ring 21 and the collar 13. Similarly, in the angular ball bearing 20 on the side of the turbine impeller 11, as shown in FIG. 1, the outer ring 22 protrudes a little further in the axial direction X than the distal end 66 of the retainer 60 and thus a small clearance is formed between the inner ring 21 and the enlarged diameter part 111. As described above, in the both angular ball bearings 20, a small clearance is also formed between the end surface 21d of the inner ring 21 in the axial direction X on the side close to the ejection port 611 and the wall surface 68a of the recessed part 68 in which the angular ball bearing 20 is placed, the wall surface 68a opposing the end surface 21d.

As described above, the clearances are respectively provided in the inner rings 21 of the two angular ball bearings 20 and thus the inner rings 21 can move a little in a thrust direction. As a result, the two angular ball bearings 20 can reliably support an axial load.

Next, operational effects of the bearing structure of a turbocharger 1 according to the present embodiment are described in detail.

According to the bearing structure 1 of the present embodiment, the oil film damper 50 is formed between the inner ring 21 of the angular ball bearing 20 and the rotor shaft 10 (formed in the clearance P). Accordingly, components inside the oil film damper 50 include the rotor shaft 10, and the turbine impeller 11 and the compressor impeller 12, both of which are mounted on the rotor shaft 10, but do not include the angular ball bearing 20 (the inner ring 21, the outer ring 22, the rotator 23, the holder 24, and the like). The (inertial) mass of the components inside the oil film damper 50 is thus relatively small. Further, the inner diameter of the inner ring 21 of the angular ball bearing 20 is much smaller than the outer diameter of the outer ring 22, and thus the contact area of the oil film damper 50 and the outer peripheral surface 10c of the rotor shaft 10 is relatively small. Such configurations as mentioned above can relatively reduce viscous force between the inner ring 21 and the rotor shaft 10.

Reduction of the viscous force reduces inhibition force caused by viscosity to hinder the rotation of a rotation body assembly 100 constituted by the components inside the oil film damper 50 about a center of mass. Further, the smaller (inertial) mass of the components inside the oil film damper 50 enables the rotation body assembly 100 to easily rotate eccentrically only with low energy. As a result, during rotation of the rotor shaft 10, the impellers 11 and 12 at ends of the rotor shaft 10 is prevented from largely whirling. Consequently, generation of unusual noise can be prevented. Further, a tip clearance between the turbine impeller 11 and the turbine housing 33 or between the compressor impeller 12 and the compressor housing 34 needs not to be so large that operation efficiency can be improved. In the case of the compressor housing 34 provided with an abradable seal, excessive contact of the compressor impeller 12 with the abradable seal can be prevented so that damage of the compressor impeller 12 and excessive wear of the abradable seal can be prevented. Moreover, as described above, the rotation body assembly 100 easily rotates eccentrically and thus not so high accuracy is required to adjust the mass balance of the rotation body assembly 100. As a result, the mass balance is easily adjusted and thus manufacturing costs can be reduced.

As described above, because the viscous force between the oil film damper 50 and the rotation body assembly 100 can be relatively reduced, an improvement in rotation response of the rotation body assembly 100 can be expected, and thus contributes to an improvement in transient performance of an internal combustion engine.

Especially when the viscosity of oil tends to be high, e.g. under low temperature environment, the reduction of the viscous force enables to sufficiently bring about an oil damping effect on the rotation body assembly 100.

The inner ring 21 is configured to rotate with the rotation of the rotor shaft 10 via the oil film damper 50. Specifically, friction in the oil film damper 50 (that is, friction between the inner ring 21 and the rotor shaft 10) is larger than friction in the angular ball bearing 20 (that is, friction between the inner ring 21 and the outer ring 22). For this reason, when the rotor shaft 10 rotates, relative rotation occurs between the inner ring 21 and the outer ring 22 in the angular ball bearing 20 but relative rotation between the inner ring 21 and the rotor shaft 10 is suppressed in the oil film damper 50, so that the inner ring 21 can rotate with the rotation of the rotor shaft 10 only via the oil film damper 50. As a result, any additional mechanism for engaging the inner ring 21 with the rotor shaft 10 need not be provided to rotate the inner ring 21 with the rotor shaft 10. For example, screw hole machining on the rotor shaft 10 needs not be performed to engage the rotor shaft 10 with the inner ring 21. Machining on an end of the inner ring 21 needs not be performed to engage the end of the inner ring 21 with an oil slinger 8. Further, machining on the end of the inner ring 21 and the collar 13 needs not be performed to engage the end of the inner ring 21 with the collar 13. Therefore, such machining costs can be eliminated and the mass balance of the rotation body assembly 100 is easily adjusted and thus manufacturing costs can be reduced.

Because the rotor shaft 10 need not be subjected to screw hole machining, fatigue strength of the rotor shaft 10 is improved as compared to a case where screw hole machining is performed on the rotor shaft 10. The improvement of fatigue strength eliminates the necessity to increase the diameter of the rotor shaft 10. As a result, the angular ball bearing 20 can be downsized and the contact area of the oil film damper 50 and the angular ball bearing 20 can be reduced. Consequently, the viscous force between the oil film damper 50 and the angular ball bearing 20 can be reduced to improve the operation efficiency of a turbocharger. Further, loosening of a screw that might be caused by high speed rotation of the rotor shaft 10 needs not be considered.

Further, use of two angular ball bearings 20 can support not only a radial load but also axial loads in both directions. These two angular ball bearings 20 employed as a bearing of the rotor shaft 10 simplify the configuration of the bearing structure of a turbocharger 1 which results in cost reduction. Still further, easy mountability of the angular ball bearing 20 contributes to an improvement in mounting workability.

According to the present embodiment, the retainer 60 is formed in a cylindrical shape having a through hole into which the rotor shaft 10 is inserted. Two angular ball bearings 20 are positioned respectively at ends of the retainer 60 in the axial direction X. The two angular ball bearings 20 bear the rotor shaft 10 at the ends of the retainer 60, and thus rotational stability of the rotor shaft 10 is improved.

According to the present embodiment, the retainer 60 includes the oil supply path 61 that ejects oil toward the oil film damper 50 to supply the oil film damper 50 with the oil. This configuration enables to exhibit a wedge effect of positively charging the oil film damper 50 inside the inner ring 21 with the oil ejected from the oil supply path 61, and thus lubricity of the oil in the oil film damper 50 is improved.

According to the present embodiment, the inner ring 21 has the inner chamfered part 211 obtained by chamfering an inner corner portion of the inner ring 21 at an end of the inner ring 21 in the axial direction X on a side close to the ejection port 611 of the oil supply path 61. This configuration enables to easily charge the oil film damper 50 inside the inner ring 21 with the oil ejected from the oil supply path 61s, and thus the lubricity of the oil in the oil film damper 50 is further improved by the wedge effect.

As described above, according to the present embodiment, it is possible to provide the bearing structure of a turbocharger 1 that can prevent generation of unusual noise, improve operation efficiency, and reduce manufacturing costs.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A bearing structure (1) of a turbocharger, the bearing structure (1) comprising:
a rotor shaft (10) having a turbine impeller (11) mounted on a first end (10a) thereof and a compressor impeller (12) mounted on a second end (10b) thereof;
two angular ball bearings (20) each of which includes an inner ring (21) and an outer ring (22) that are supported in relatively rotatable manner, the inner ring (21) having the rotor shaft (10) inserted therein;
a retainer (60) that holds the outer ring (22);
a housing (30) that houses the rotor shaft (10), the angular ball bearings (20), and the retainer (60); and
an oil film damper (50) that is formed of oil in a film state and is interposed between the inner ring (21) and an outer peripheral surface (10c) of the rotor shaft (10), wherein
the inner ring (21) is configured to rotate with rotation of the rotor shaft (10) via the oil film damper (50).

2. The bearing structure (1) according to claim 1, wherein the retainer (60) is formed in a cylindrical shape having a through hole into which the rotor shaft (10) is inserted, and the two angular ball bearings (20) are positioned respectively at both ends of the retainer (60) in an axial direction (X).

3. The bearing structure (1) according to claim 1 or 2, wherein the retainer (60) includes an oil supply path (61) that ejects oil toward the oil film damper (50) to supply the oil film damper (50) with the oil.

4. The bearing structure (1) according to claim 3, wherein the inner ring (21) has an inner chamfered part (211) obtained by chamfering an inner corner portion of the inner ring (21) at an end of the inner ring (21) on a side close to an ejection port (611) of the oil supply path (61) in an axial direction (X).
